**Europäisches Patentamt**

**European Patent Office**

**Office européen des brevets**

(19)

(11) Veröffentlichungsnummer: **0 112 504**
**B1**

(12) # EUROPÄISCHE PATENTSCHRIFT

(45) Veröffentlichungstag der Patentschrift:
20.05.87

(21) Anmeldenummer: **83111791.6**

(22) Anmeldetag: **24.11.83**

(51) Int. Cl.⁴: **A 23 L 1/40,** A 23 L 1/221

(54) Verfahren zur Herstellung eines klumpenfrei heissdispergierbaren dehydratisierten Basisproduktes für gebundene Sossen und Suppen.

(30) Priorität: **27.11.82 DE 3243963**

(43) Veröffentlichungstag der Anmeldung:
**04.07.84 Patentblatt 84/27**

(45) Bekanntmachung des Hinweises auf die Patenterteilung:
**20.05.87 Patentblatt 87/21**

(84) Benannte Vertragsstaaten:
**AT BE CH FR GB IT LI NL SE**

(56) Entgegenhaltungen:
**EP-A-0 029 153
BE-A-793 411
GB-A-2 000 011**

(73) Patentinhaber: **CPC INTERNATIONAL INC.,
International Plaza P.O. Box 8000, Englewood
Cliffs New Jersey 07632 (US)**

(72) Erfinder: **Seewi, Gila, Derfflinger Strasse 17,
D-7100 Heilbronn- Böckinger (DE)**
Erfinder: **Schneider, Gerhard, Dr., Max-
Planckstrasse 10/4, D-7100 Heilbronn- Sontheim
(DE)**
Erfinder: **Maier, Dieter, Happenbacherstrasse 38,
D-7101 Untergruppenbach (DE)**
Erfinder: **Bohrmann, Hans, Dr., Moerickeweg 8,
D-7129 Talheim (DE)**
Erfinder: **Müller, Günther, Dr. Dipl.- Chem,
Kellergasse 32, D-7101 Flein (DE)**

(74) Vertreter: **Patentanwälte Müller- Boré, Deufel,
Schön, Hertel, Lewald, Otto, Postfach 26 02 47
Isartorplatz 6, D-8000 München 26 (DE)**

## Beschreibung

Die Erfindung betrifft ein Verfahren zur Herstellung eines klumpenfrei heißdispergierbaren Basisproduktes für gebundene Soßen und Suppen durch Vorvermischen eines Stärkematerials mit einem gegebenenfalls verflüssigten Speisefett als wesentlichen Komponenten und Wärmebehandlung dieser Vormischung bei erhöhter Temperatur. Heissdispergierbare Produkte für mit Verdickungsmitteln auf Stärkebasis gebundene Soßen und Suppen, sowie Verfahren zu, ihrer Herstellung sind in zahlreichen Varianten bekannt. So hat man bereits versucht, die Heißdispergierbarkeit des Stärkebindemittels durch Agglomerieren, Überziehen mit Fett oder hydrophilen Substanzen und/oder die Verwendung sogenannter Hitze/Feuchte-behandelter Knollen- bzw. Wurzelstärken zu verbessern, und zwar was die letztgenannte Methode betrifft, mit an sich durchaus beachtlichem Erfolg.

Der Erfindung lag daher die Aufgabe zugrunde, ein verbessertes Verfahren der eingangs bezeichneten Art zu schaffen, das in technischem Maßstab einfach durchführbar ist und dennoch zuverlässig zu lagerungsstabilen, einfach handhabbaren und insbesondere rieselfähigen, klumpenfrei heißdispergierbaren Basistrockenprodukten mit hoher Dickungskraft führt, die gebundene Soßen und Suppen mit hinsichtlich der sensorischen Eigenschaften, insbesondere der glatten, samtig-sämigen, kurzen Textur und des abgerundeten Geschmacks, mit klassisch-küchenmäßig zubereiteter Roux gebundenen, hellen oder dunklen Soßen und Suppen zumindest gleichwertiger Qualität liefern.

Diese Aufgabe läßt sich, wie gefunden wurde, überraschenderweise mit Hilfe scheinbar unbedeutender Änderungen der bekannten Arbeitsweisen dadurch lösen, daß man

a) in einer ersten Stufe eine im wesentlichen homogene Vormischung aus dem Stärkematerial und dem Speisefett herstellt und

b) (I) 0,5 bis 15 Gew.-% Wasser der Vormischung zugesetzt werden und anschließend die Vormischung auf eine erhöhte Temperatur, gegebenenfalls unter erhöhtem Druck, erhitzt wird oder

(II) die Vormischung auf eine erhöhte Temperatur ohne Zusatz von Wasser zu der Vormischung, jedoch unter erhöhtem Druck erhitzt wird.

Die Prozentangaben beziehen sich jeweils auf das Gesamtgewicht der Masse.

Wenn von einer "homogenen" Vormischung die Rede ist, so ist damit natürlich keine im strikten Wortsinn homogene, sondern eine "möglichst gleichmäßige" Mischung gemeint.

Das Erhitzen auf die erhöhte Temperatur gemäß Stufe b) sieht eine Wärmebehandlung des Gemisches bis zur Erreichung einer Endtemperatur vor, die insbesondere beim Arbeiten unter Normal- oder vermindertem Druck meist nur allmählich erreicht wird. Diese Temperatur liegt im allgemeinen zwischen 90 und 155°C, insbesondere 90 und 150°C, jedoch ist es erfahrungsgemäß zweckmäßiger in einem Bereich von 105 bis 150°C und insbesondere 110 bis 135°C und in ganz bevorzugter Weise zwischen 115 und 125°C zu arbeiten, um einerseits zu geringe Behandlungswirkungen und/oder übermäßig lange Behandlungszeiten bei relativ niedrigen Temperaturen und andererseits zu rasche und/oder intensive Bräunung bei relativ hohen Temperaturen zu vermeiden.

Die Zeitspanne, während welcher die Wärmebehandlung der Stufe b), wobei diese die Aufheizphase einschließt, durchgeführt wird, kann je nach dem gewünschten Effekt der Zusammensetzung des Ansatzes, der Aufheizgeschwindigkeit und der gewählten Wärmebehandlungstemperatur innerhalb von breiten Grenzen schwanken, liegt jedoch in der Regel zwischen 0,2 und 5 Stunden, insbesondere zwischen 0,3 und 3,5 Stunden, noch häufiger zwischen 0,4 und 2,5 Stunden und ganz besonders zwischen 0,5 und 1,5 Stunden, wobei man beim Arbeiten mit höheren Wärmebehandlungstemperaturen, raschem Aufheizen und/oder zur Herstellung heller Produkte mit relativ kurzen Behandlungszeiten auskommt.

Durch die Wärmebehandlung muß der Wassergehalt der Masse bis 7,5 Gew.-%, bezogen auf das Gesamtgewicht des Produktes vermindert werden. Dies kann zwar fallweise ausreichend sein, jedoch ist erfahrungsgemäß in der Regel eine weitere Verminderung des Wassergehaltes auf höchstens 6, vorzugsweise nicht mehr als 5 und insbesondere weniger als 4 Gew.-% zu empfehlen.

Die Einstellung des Wassergehaltes des Ansatzes durch Zusatz von Wasser (Fremdwasser) ist bei der Durchführung des erfindungsgemäßen Verfahrens kritisch und sogar unverzichtbar, wenn die Wärmebehandlung nicht unter erhöhtem, insbesondere autogenem Druck durchgeführt wird. Die jeweils optimale Menge hängt von den Umständen des Einzelfalles, insbesondere Art, Menge und Wassergehalt der übrigen Komponenten des Ansatzes, den Behandlungsbedingungen und/oder dem gewünschten Ergebnis ab, kann jedoch vom Fachmann innerhalb des beanspruchten Bereiches empirisch ermittelt werden und liegt erfahrungsgemäss meist zwischen 1,5 und 10, meist zwischen 2 und 7 und insbesondere in einem Bereich von 2,8 bis 4 Gew.-%. bezogen auf das Gesamtgewicht des Ansatzes. Vorzugsweise besitzt das der Vormischung zugesetzte Wasser eine Temperatur von höchstens 80°C.

Wie gefunden wurde, sind für die Erzielung optimaler Produkteigenschaften überraschenderweise scheinbar geringfügige Mengen an Milcheiweiss, die dem Gemisch erfindungsgemäss zweckmässigerweise in Form von Dispersionen im Wasserzusatz einverleibt werden, ausserordentlich günstig, ja häufig sogar erforderlich. Die Menge des Milcheiweisszusatzes, auf den, wie betont sei zwar fallweise verzichter werden kann (vgl. Beispiel 1), liegt üblicherweise in einem Bereich 0,02 bis 1 Gew. -%. Besonders bewährt haben sich Zusatze in Mengen von 0,03 bis 0,35, vorzugsweise 0,05 bis 0,2 und insbesondere 0,075 bis 0,15 Gew.-%, bezogen auf das Gewicht des Ansatzes. Als Milchprotein eignen sich insbesondere Casein(ate) und/oder Molkenprotein, das (die) für die Zwecke der Erfindung gegebenenfalls im Gemisch mit Lactose und insbesondere in Form von Molken- und/oder Magermilchpulver eingesetzt werden kann (können). Als Wasserzusatz mit darin dispergiertem Milcheiweiss kann man, daher auch Sahne, Milch oder Magermilch verwenden.

Als Stärkematerial kommen vor allem Mehle, insbesondere Weizen-, Reis- und/oder Roggenmehl in Betracht, jedoch können auch Stärken, und zwar vorzugsweise körnige, d.h. unverkleisterte Stärken verwendet werden, wobei sich Knollen- und Wurzelstärken besonders bewährt haben.

Der Anteil des Stärkematerials liegt zwischen etwa 20 und 75 Gew.-% und wird zweckmäßigerweise in einem Bereich von 40 bis 70 und vorzugsweise 50 bis 65 Gew.-% gewählt, wobei man bevorzugt Stärkematerialien mit handelsüblichem Feuchtigkeitsgehalt verwendet.

Als Fettkomponente können für die Zwecke der Erfindung zwar im Prinzip alle tierischen und pflanzlichen Speisefette verwender werden, jedoch empfiehlt sich in der Regel die Verwendung relativ harter, hochschmelzender Speisefette, und zwar insbesondere die von Fetten mit einem Schmelzpunkt von mindestens 44°C, da sie erfahrungsgemäß Produkte mit guter Lagerungsstabilität und Rieselfähigkeit ergeben. Bevorzugt werden daher erfindungsgemäß Speisefette mit einem Gehalt an mehrfach ungesättigten Fettsäuren von höchstens 30, vorzugsweise nicht mehr als 15 und insbesondere weniger als 2,5 % und/oder einem Gehalt an mittelkettigen und/oder kurzkettigen Fettsäuren von weniger als 20, vorzugsweise höchstens 5 und insbesondere unter 0,2 % verwendet. Die eingesetzte Fettmenge kann innerhalb des Bereiches von 25 bis 80 Gew.-% schwanken und wird zweckmäßigerweise in einem Bereich von 60 bis 30 und vorzugsweise 35 bis 45 Gew.-% gehalten.

Außer den notwendigen Komponenten können für die Zwecke der Erfindung als Wahlkomponenten grundsätzlich alle anderen sonstigen in Trockensoßen- und -suppenprodukten gebräuchlichen Bestandteile wie Farb- und/oder Aromazusätze in üblichen Mengen Verwendung finden, die den Basistrockenprodukten grundsätzlich an einem beliebigen Punkt des Verfahrens vor, während und/oder nach der Wärmebehandlung einverleibt werden können. Beispielsweise kann man der Vormischung aus Stärkematerial und Speisefett Fremdwasser in Form von Bouillon, Würze, Obst- und/oder Gemüsesäften sowie gegebenenfalls sogar püriertem Fisch oder Fleisch zusetzen.

Gemäß einer besonders bevorzugten Ausführungsform der Erfindung mischt man der Vormischung fein zerkleinertes bzw. püriertes Gemüse, insbesondere Zwiebel, Karotten, Lauch, Petersilienwurzeln und/oder Sellerie in Mengen von bis zu 18 Gew.-% zu.

**Vergleichsversuch 1**

In einem auf 60°C vorgeheizten Kneter werden 3,0 kg geschmolzenes gehärtetes Pflanzenfett mit einem Schmelzpunkt von 45°C und 0,3 l Wasser von 60°C vorgelegt. Darauf wurden 4,5 kg Weizenmehl zugegeben und mit dem Fett/ Wassergemisch verknetet. Anschließend wurde die Temperatur auf 120°C gesteigert und die Mischung 20 Minuten bei dieser Temperatur gehalten. Bei dieser Wärmebehandlung verdampfte der größte Teil des zugesetzten Fremdwassers sowie ein Großteil des ursprünglich im Mehl enthaltenen Wassers. Das Produkt wurde anschließend auf Raumtemperatur abgekühlt und auf einer Reibe zerkleinert. Der Endwassergehalt im Produkt betrug 3,6 Gew.-%.

Das zerkleinerte Produkt war zwar gut rieselfähig und wies einen angenehmen Geschmack auf, ergab aber beim Einrühren in kochendes Wasser sehr viele Klumpchen, die sich auch nach längerem Kochen und Rühren nicht lösten.

**Beispiel 1**

Bei diesem Beispiel wurde wie bei Vergleichsversuch 1 verfahren, wobei jedoch abweichend davon das geschmolzene Pflanzenfett vorgelegt, anschließend des Mehl zugegeben und nach homogener Vermischung dieser beiden Rezeptbestandteile das Wasser zugemischt wurde. Der Endwassergehalt des Produktes lag bei 3,2 Gew.-%. Das zerkleinerte Produkt war gut rieselfähig und ließ sich ohne Klumpenbildung in kochendes Wasser einrühren. Es wurde eine Suppen- oder Soßenbasis von angenehmem Geschmack und mit einer sehr glatten und zarten Struktur erhalten, die allerdings beim Abkühlen eine gewisse Gelstruktur entwickelte.

**Vergleichsversuche 1a und 1b**

Bei diesen Vergleichsversuchen wurde analog Beispiel 1 gearbeitet, wobei jedoch abweichend davon kein zusätzliches Fremdwasser eingebracht (Vergleichsversuche 1a) bzw. statt des handelsüblichen Mehls mit ca. 14 Gew.-% Wassergehalt ein getrocknetes Mehl mit 6 Gew.-% Wassergehalt (Vergleichsversuch 1b) eingesetzt wurde. Die Endprodukte ergaben beim Einrühren in kochendes Waser eine starke bis extrem starke Gelstruktur und waren somit nicht brauchbar.

### Beispiel 2

Entsprechend Beispiel 1 wurde ein weiterer Versuch durchgeführt, bei dem dem Fremdwasser 0,5 % Magermilchpulver (bezogen auf den Gesamtansatz) zugesetzt wurden.

Das dabei erhaltene Produkt hatte analoge Eigenschaften wie das in Beispiel 1 erhaltene Produkt. Die Struktur war jedoch noch glatter und zarter, die Farbe wärmer und deckender und die in Beispiel 1 erwähnte Gelstruktur des im Wasser aufgekochten Produkts war verschwunden.

### Beispiel 3

In einem beheizbaren Mischer, der auf 60°C erwärmt worden war, wurden 3,0 kg geschmolzenes gehärtetes Pflanzenfett und 4,5 kg Weizenmehl homogen vermiscnt. Anschließend wurden 0,9 kg einer gekutterten Gemüsemischung, bestehend aus 0,4 kg Zwiebeln, 0,2 kg Möhren, 0,1 kg Lauch, 0,1 kg Sellerieknollen und 0,1 kg Tomatenmark (doppelt konzentriert) eingebracht, und nich homogener Vermischung wurde die Wärmebehandlung mit anschließender Abkühlung und Zerkleinerung, wie in Beispiel 1 beschrieben, vorgenommen. Der Endwassergehalt des Produkts betrug 4,6 %.

Das gut rieselfähige Endprodukt von hellbrauner Farbe ließ sich ohne Klumpenbildung in kochendes Wasser einrühren. Die Struktur war glatt und cremig. Der Geschmack der aufgekochten Mischung wurde als intensiver Gemüse-/Bratengeschmack erlebt.

### Beispiel 3 a

Beispiel 3 wurde wiederholt, wobei jedoch beim Erhitzungsschritt ein leichtes Vakuum (0,1 - 0,3 bar) zur Verbesserung der Wasserdampfentfernung angelegt wurde. Dadurch konnte die Dauer der Wärmebehandlung, die stark durch die Verdampfungsgeschwindigkeit des Wassers bestimmt wird, deutlich vermindert werden, ohne daß sich an der Qualität des Endprodukts etwas änderte.

### Beispiel 4

Entsprechend Vergleichsversuch 1a, also ohne Zusatz von Fremdwasser, wurde ein weiterer Versuch durchgeführt, bei dem jedoch die Aufheizung und Wärmebehandlung im geschlossenen Kneter durchgeführt wurde. Der Überdruck im Kneter betrug bei der Behandlungstemperatur von 120°C ca. 1,2 bar. Bei Erreichen der Guttemperatur von 120°C wurde soviel Wasserdampf abgelassen, daß der genannte Überdruck anfangs erhalten blieb. Nach einigen Minuten Haltezeit bei Überdruck von 1,2 bar wurde der Überdruck kontinuierlich bis auf 0 abgebaut unter gleichzeitigem Halten der Guttemperatur von 120°C. 20 Minuten nach Erreichen der Höchsttemperatur von 120°C wurde die Masse gekühlt und anschließend zerkleinert. Der Endwassergehalt betrug 3,6 %.

Durch Anwendung von Überdruck konnte die relativ lange Behandlungszeit, die bei den Beispielen 1 - 3 erforderlich war, drastisch (auf die Hälfte) verkürzt werden. Das erhaltene rieselfähige Produkt von bräunlicher Farbe ließ sich in kochendem Wasser klumpenfrei dispergieren und ergab eine Suppen- oder Soßenbasis, die die schon beschriebene glatte, zarte und cremige Struktur aufwies.

### Beispiel 4a

Da die in Beispiel 4 beschriebene Bräunung des Endprodukts fallweise störend sein kann, wurde ein weiterer Versuch mit 4,5 kg Weizenmehl mit handelsüblichem Wassergehalt (14 %) und 4,5 kg gehärtetem Pflanzenfett ohne zugesetztes Fremdwasser und Milchprotein entsprechend den in Beispiel 4 genannten Prozeßbedingungen durchgeführt. Der Endwassergehalt betrug 3,5 %.

Das zerkleinerte, helle Produkt ließ sich in kochendes Wasser klumpenfrei einrühren und ergab eine Suppen- oder Soßenbasis, an der weder im warmen Zustand noch beim Abkühlen eine Gelstruktur festzustellen war.

Dieses Beispiel zeigt somit, daß man beim Durchführen der wärmebehandlung unter Überdruck überraschenderweise auch ohne Zusatz von Fremdwasser und Milcheiweiß Produkte erhalten kann, die beim Aufkochen in Wasser klumpenfrei heißdispergierbar sind und Suppen- oder Soßenbasen mit glatter, zarter und cremiger Struktur wie Produkte liefern, die bei einer Wärmebehandlung unter vermindertem oder Normaldruck nur unter Einsatz von Fremdwasser und Milcheiweiß erhältlich sind.

### Patentansprüche

1. Verfahren zur Herstellung eines klumpenfrei heißdispergierbaren dehydratisierten Basisproduktes für gebundene Soßen und Suppen durch Vorvermischung eines Stärkematerials mit einem gegebenenfalls verflüssigten Speisefett als wesentlichen Komponenten und Wärmebehandlung dieser Vormischung bei erhöhter Temperatur, dadurch gekennzeichnet, daß

a) in einer ersten Stufe eine im wesentlichen homogene Vormischung aus dem Stärkematerial und dem Speisefett hergestellt wird und

b) (I) 0,5 bis 15 Gew.-% Wasser der Vormischung zugesetzt werden und anschließend die Vormischung auf eine erhöhte Temperatur, gegebenenfalls unter erhöhtem Druck, erhitzt wird oder

(II) die Vormischung auf eine erhöhte Temperatur ohne Zusatz von Wasser zu der Vormischung, jedoch unter erhöhtem Druck erhitzt wird.

2. Verfahren nach Anspruch 1, dadurch gekennzeichnet, daß die Vormischung auf eine erhöhte Temperatur zwischen 90 und 150°C erhitzt wird.

3. Verfahren nach Anspruch 1 oder 2, dadurch gekennzeichnet, daß die Vormischung auf eine erhöhte Temperatur während einer Zeitspanne von 0,2 bis 5 Stunden erhitzt wird.

4. Verfahren nach einem der vorhergehenden Ansprüche, dadurch gekennzeichnet, daß 2 bis 7 Gew.-% Wasser der im wesentlichen homogenen Vormischung zugesetzt werden.

5. Verfahren nach einem der vorhergehenden Ansprüche, dadurch gekennzeichnet, daß das der im wesentlichen homogenen Vormischung zugesetzte Wasser eine Temperatur von höchstens 80°C besitzt.

6. Verfahren nach einem der vorhergehenden Ansprüche, dadurch gekennzeichnet, daß das der im wesentlichen homogenen Vormischung zugesetzte Wasser 0,02 bis 1 Gew.-% Milchprotein enthält.

7. Verfahren nach Anspruch 6, dadurch gekennzeichnet, daß das verwendete Milchprotein aus Kasein und/oder Molkenprotein, gegebenenfalls in Mischung mit Lactose, besteht.

8. Verfahren nach einem der vorhergehenden Ansprüche, dadurch gekennzeichnet, daß der im wesentlichen homogenen Vormischung fein zerkleinertes Gemüse in einer Menge bis zu 18 Gew.-%, bezogen auf das Gesamtgewicht, zugesetzt wird.

## Claims

1. A process for the preparation of a dehydrated base product for thickened sauces and soups, the product being hot-dispersable free from lumps, through pre-blending of a starch material with an optionally liquefied edible fat as essential components and heat treatment of this pre-mix at elevated temperature, characterized in that

a) in a first step, there is prepared a substantially homogeneous pre-mix of the starch material and the edible fat and

b) (I) from 0.5 to 15 % by weight of water are added to the pre-mix, and subsequently thereto the pre-mix is heated to an elevated temperature, optionally under increased pressure, or

(II) the pre-mix is heated to an elevated temperature without the addition of water to the pre-mix, but under elevated pressure.

2. A process according to claim 1, characterized in that the pre-mix is heated to an elevated temperature of between 90 and 150°C.

3. A process according to claim 1 or 2, characterized in that the pre-mix is heated to an elevated temperature for a time span of 0.2 to 5 hours.

4. A process according to one of the preceding claims, characterized in that from 2 to 7 % by weight of water are added to the substantially homogeneous pre-mix.

5. A process according to one of the preceding claims, characterized in that the water added to the substantially homogeneous pre-mix has a temperature of at most 80°C.

6. A process according to one of the preceding claims, characterized in that the water added to the substantially homogeneous pre-mix contains from 0.02 to 1 % by weight of milk protein.

7. A process according to claim 6, characterized in that the milk protein used consiste of casein and/or whey protein, optionally in mixture with lactose.

8. A process according to one of the preceding claims, characterized in that finely comminuted vegetables are added to the substantially homogeneous pre-mix in an amount of up to 18 % by weight, based upon the total weight.

## Revendications

1. Procédé de préparation d'un produit de base déshydraté, non grumeleux, dispersable à chaud, pour soupes et sauces liées, par prémélange d'une matière amylacée avec une graisse alimentaire, liquéfiée s'il y a lieu, comme composants essentiels, et traitement thermique de ce prémélange à température élevée, caractérisé par le fait que

a) lors d'une première étape, on prépare un prémélange substantiellement homogène à partir de la matière amylacée et de la graisse alimentaire, et

b) (I) on ajoute à ce prémélange 0,5 à en poids d'eau, et on le porte ensuite à une température élevée, sous une pression élevée s'il y a lieu, ou

(II) on porte le prémélange à une température élevée sans apport d'eau, mais sous une pression élevée.

2. Procédé selon la revendication 1, caractérisé par le fait que le prémélange est porté à une température élevée de 90 à 150°C.

3. Procédé selon la revendication 1 ou 2, caractérisé par le fait que le prémélange est porté à une température élevée pendant un temps défini de 0,2 à 5 heures.

4. Procédé selon une des revendications précédentes, caractérisé par le fait qe l'on ajoute au prémélange substantiellement homogène 2 à 7% en poids d'eau.

5. Procédé selon une des revendications précédentes, caractérisé par le fait que l'eau ajoutée au prémélange substantiellement homogène a une température inférieure ou égale à 80°C.

6. Procédé selon une des revendications précédentes, caractérisé par le fait que l'eau ajoutée au prémélange substantiellement homogène contient 0,02 à 1% en poids de protéines de lait.

7. Procédé selon la revendication 6, caractérisé par le fait que les protéines de lait utilisées se composent de caséine et/ou de protéines de lactosérum, mélangées, le cas échéant, à du lactose.

8. Procédé selon une des revendications précédentes, caractérisé par le fait que l'on ajoute au prémélange substantiellement homogène des légumes hachés fins en une quantité pouvant atteindre 18% du poids total.